# FASCICULE DE BREVET EUROPEEN

(11) **EP 3 656 634 B1**
(45) Date de publication et mention de la délivrance du brevet: **17.03.2021**
(21) Numéro de dépôt: 19211038.5
(22) Date de dépôt: 22.11.2019
(51) Int. Cl.: B61D 27/00, B60H 1/00

(54) **PROCÉDÉ DE MAINTENANCE DE FILTRES À AIR D'UN VÉHICULE FERROVIAIRE**
WARTUNGSVERFAHREN DER LUFTFILTER EINES SCHIENENFAHRZEUGS
METHOD FOR MAINTENANCE OF AIR FILTERS OF A RAILWAY VEHICLE

(30) Priorité: 22.11.2018 FR 1871712
(43) Date de publication de la demande: 27.05.2020
(73) Titulaire: SpeedInnov, 75008 Paris (FR)
(72) Inventeur: FLIX, Nicolas, HAVERTOWN, 19083 (US); SARTI, Christophe, 17220 Saint-Médard-d'Aunis (FR)
(74) Mandataire: Lavoix

(56) Documents cités:
- CN-U- 208 101 988
- FR-A1- 2 858 664
- KR-B1- 101 547 971
- US-A- 5 954 577

## Description

La présente invention concerne un procédé de maintenance d'un dispositif de ventilation d'un véhicule ferroviaire, ledit véhicule comprenant des parois définissant un espace extérieur et un espace intérieur, ledit dispositif de ventilation comportant : un conduit d'entrée d'air traversant l'une desdites parois et débouchant sur l'espace intérieur ; un filtre à air disposé dans ledit conduit ; et un ventilateur apte à insuffler de l'air dans l'espace intérieur à travers ledit conduit, définissant une face d'entrée et une face de sortie du filtre à air ; le dispositif de ventilation comprenant en outre un organe de mesure de pression, apte à mesurer une différence de pression entre l'air de l'espace extérieur et l'air de l'espace intérieur, ledit espace intérieur étant considéré au niveau de la face de sortie du filtre à air.

Un tel procédé est par exemple connu des documents CN-208101988-U et KR-101547971-B1.

L'invention s'applique particulièrement aux systèmes de ventilation éventuellement combinée au chauffage et/ou à la climatisation, de tels systèmes impliquant l'amenée d'un flux d'air extérieur dans l'espace intérieur considéré.

Afin d'éliminer du flux d'air les poussières et/ou d'autres sources de pollution, il est connu de mettre en place un filtre sur la trajectoire dudit flux. Un tel système de ventilation de véhicule ferroviaire, comprenant un filtre, est par exemple décrit dans le document US5954577.

Les particules retenues par le filtre ont tendance à l'encrasser, ce qui augmente au cours du temps sa résistance au passage de l'air. Il est donc nécessaire de changer et/ou de nettoyer régulièrement les filtres.

Habituellement, dans les véhicules ferroviaires, la durée de vie d'un filtre est définie de manière théorique et tous les filtres sont changés selon une périodicité correspondante. Cependant, l'encrassement réel d'un filtre dépend de ses conditions d'utilisation, notamment d'une exposition à un environnement plus ou moins pollué, très dépendant des saisons (pollen, ...) et des conditions rencontrées (zones poussiéreuses, vent de sable, ...).

La présente invention a pour objet d'optimiser les opérations de nettoyage et/ou de changement des filtres à air par une estimation de leur degré d'encrassement.

A cet effet, l'invention a pour objet un procédé de maintenance du type précité, comprenant les étapes suivantes : mesure de la différence de pression entre l'air de l'espace extérieur et l'air de l'espace intérieur, et si ladite différence de pression est supérieure à un premier seuil, émission d'un premier signal d'alerte.

En effet, la mesure de la différence de pression traduit la perte de charge du flux d'air en sortie du filtre, ladite perte de charge correspondant à un niveau d'encrassement.

Suivant d'autres aspects avantageux de l'invention, le procédé de maintenance comporte l'une ou plusieurs des caractéristiques suivantes, prises isolément ou suivant toutes les combinaisons techniquement possibles :
- le procédé de maintenance comprend les étapes suivantes : si la différence de pression est supérieure au premier seuil, émission du premier signal d'alerte vers un récepteur extérieur au véhicule ferroviaire ; et si la différence de pression est supérieure à un deuxième seuil, ledit deuxième seuil étant supérieur au premier seuil, émission d'un deuxième signal d'alerte vers un récepteur interne au véhicule ferroviaire ;
- l'émission du deuxième signal d'alerte est simultanée à une diminution d'une vitesse de rotation du ventilateur.

L'invention se rapporte en outre à un véhicule ferroviaire comprenant : des parois définissant un espace extérieur et un espace intérieur ; et un premier dispositif de ventilation, ledit premier dispositif de ventilation comportant : un premier conduit d'entrée d'air traversant l'une des parois et débouchant sur l'espace intérieur ; un premier filtre à air disposé dans ledit premier conduit ; et un premier ventilateur apte à insuffler de l'air dans l'espace intérieur à travers ledit premier conduit, définissant une face d'entrée (44) et une face de sortie du premier filtre à air ; le premier dispositif de ventilation comprenant en outre un premier organe de mesure de pression, apte à mesurer une différence de pression entre l'air de l'espace extérieur et l'air de l'espace intérieur, ledit espace intérieur étant considéré au niveau de la face de sortie du premier filtre à air; le premier dispositif de ventilation étant muni de moyens de mise en œuvre d'un procédé tel que décrit ci-dessus.

Suivant d'autres aspects avantageux de l'invention, le véhicule ferroviaire comporte l'une ou plusieurs des caractéristiques suivantes, prises isolément ou suivant toutes les combinaisons techniquement possibles :
- le premier organe de mesure de pression est un capteur de pression différentielle, disposé au niveau du premier filtre à air ;
- le premier organe de mesure de pression comporte un premier et un deuxième capteurs de pression absolue, le premier capteur étant disposé dans l'espace extérieur, le deuxième capteur étant disposé dans l'espace intérieur, au niveau de la face de sortie du premier filtre à air ;
- le premier capteur est disposé au niveau de la face d'entrée du premier filtre à air ;
- le premier capteur est disposé à distance du premier conduit d'entrée d'air ;
- le véhicule ferroviaire comprend en outre un deuxième dispositif de ventilation, ledit deuxième dispositif de ventilation comportant : un deuxième conduit d'entrée d'air traversant une paroi du véhicule et débouchant sur l'espace intérieur ; un deuxième filtre à air disposé dans ledit deuxième conduit ; et un deuxième ventilateur apte à insuffler de l'air dans l'espace intérieur à travers ledit deuxième conduit, définissant une face d'entrée et une face de sortie du deuxième filtre à air ; le deuxième dispositif de ventilation comprenant en outre un deuxième organe de mesure de pression, apte à mesurer une différence de pression entre l'air de l'espace extérieur et l'air de l'espace intérieur ; ledit deuxième organe de mesure de pression comprenant : le premier capteur de pression absolue ; et un troisième capteur de pression absolue, disposé dans l'espace intérieur, au niveau de la face de sortie du deuxième filtre à air ; le deuxième dispositif de ventilation étant muni d'un dispositif électronique de mise en œuvre d'un procédé tel que décrit ci-dessus ;
- le premier dispositif de ventilation comporte en outre un échangeur de chaleur disposé dans le premier conduit, ledit échangeur étant apte à effectuer un échange thermique avec l'air traversant ledit conduit.

L'invention sera mieux comprise à la lecture de la description qui va suivre, donnée uniquement à titre d'exemple non limitatif et faite en se référant aux dessins sur lesquels :
- [Fig 1] la figure 1 est une vue schématique, en coupe, d'un véhicule ferroviaire selon un premier mode de réalisation de l'invention ;
- [Fig 2] la figure 2 est une vue schématique latérale d'un véhicule ferroviaire selon un deuxième mode de réalisation de l'invention ;
- [Fig 3] la figure 3 est une vue schématique d'un dispositif électronique de maintenance du véhicule ferroviaire de la figure 1 ; et
- [Fig 4] la figure 4 représente un logigramme des étapes d'un programme exécuté par le dispositif électronique de la figure 3.

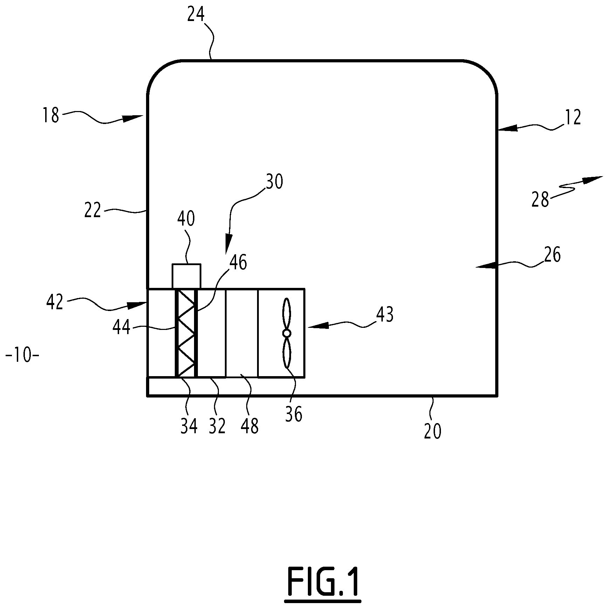

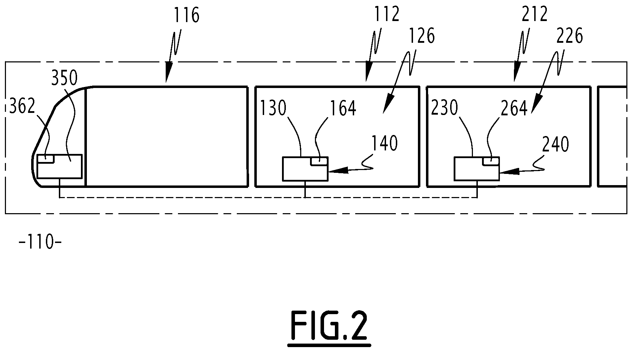

Les figures 1 et 2 représentent schématiquement un véhicule ferroviaire 10 et un véhicule ferroviaire 110, respectivement selon un premier et selon un deuxième modes de réalisation de l'invention. Les véhicules ferroviaires 10, 110 seront décrits simultanément ci-après.

Le véhicule ferroviaire 10, 110 est de préférence un véhicule de transport de voyageurs, notamment de type train, métro, tramway ou RER. Plus préférentiellement, le véhicule ferroviaire 10, 110 est de type train à grande vitesse.

Le véhicule ferroviaire 10, 110 comporte au moins une voiture 12, 112, 212, apte à recevoir des passagers. Dans le mode de réalisation de la figure 2, le véhicule ferroviaire 110 comporte au moins une première 112 et une deuxième 212 voitures reliées l'une à l'autre, ainsi qu'une motrice 116, reliée à la première voiture 112.

La voiture 12 du véhicule ferroviaire 10 est représentée en coupe à la figure 1. La voiture 12 comprend une caisse 18 et deux bogies (non représentés) sur lesquels repose ladite caisse. La caisse 18 comporte un plancher 20, des parois latérales 22 et un pavillon 24, qui définissent un espace 26 intérieur à la caisse, ainsi qu'un espace extérieur 28.

La voiture 12 comprend en outre un dispositif 30 de ventilation de l'espace intérieur 26.

Le dispositif de ventilation 30 est notamment apte à insuffler dans ledit espace intérieur 26 de l'air provenant de l'espace extérieur 28. A cet effet, le dispositif de ventilation 30 comporte un conduit 32 d'entrée d'air, un filtre à air 34 et un ventilateur 36.

Le dispositif de ventilation 30 comporte en outre un conduit de sortie d'air (non représenté), permettant de rejeter dans l'espace extérieur 28 de l'air provenant de l'espace intérieur 26.

Le dispositif de ventilation 30 comporte en outre un dispositif électronique 40 de maintenance, qui sera décrit ultérieurement.

Une entrée 42 du conduit 32 débouche sur une ouverture ménagée dans une paroi latérale 22 de la caisse 18. Ladite ouverture est éventuellement équipée d'une grille ou de persiennes. Une sortie 43 du conduit 32 débouche dans l'espace intérieur 26.

Le filtre à air 34 est disposé dans le conduit 32, à proximité de l'entrée 42. De préférence, le filtre à air 34 obture complètement une section dudit conduit. Le filtre à air 34 est perméable à l'air et apte à retenir notamment les particules solides de type poussières.

Le filtre à air 34 comporte une face d'entrée 44 et une face de sortie 46, respectivement orientées vers l'entrée 42 et vers la sortie 43 du conduit 32.

Le ventilateur 36 est disposé dans le conduit 32, par exemple à proximité de la sortie 43. Le ventilateur 36 comporte notamment un moteur électrique et est apte à générer un flux d'air entre l'entrée 42 et la sortie 43 du conduit 32.

De manière optionnelle, comme représenté sur la figure 1, le dispositif de ventilation 30 comporte en outre un échangeur de chaleur 48, disposé dans le conduit 32. L'échangeur 48 est apte à effectuer un échange thermique avec le flux d'air traversant le conduit 32, afin de réchauffer ou de refroidir ledit flux d'air. L'échangeur 48 fait par exemple partie d'un dispositif de pompe à chaleur. De préférence, l'échangeur 48 est disposé en aval du filtre à air 34.

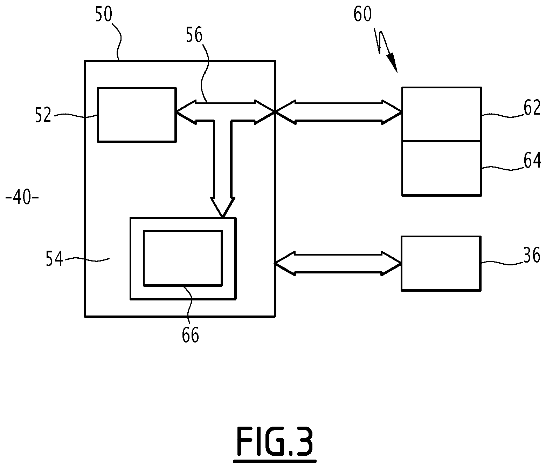

Le dispositif électronique 40 est représenté schématiquement à la figure 3. Le dispositif électronique 40 comporte notamment un boîtier 50, situé dans l'espace intérieur 26. Le boîtier 50 comporte par exemple un microprocesseur 52, une mémoire de programme 54 et au moins un bus de communication 56. De préférence, le boîtier 50 est électroniquement relié au ventilateur 36.

Le dispositif électronique 40 comporte également un organe 60 de mesure de pression, électroniquement relié au boîtier 50. L'organe de mesure 60 est apte à mesurer une différence de pression entre l'air de l'espace extérieur 28 et l'air de l'espace intérieur 26, au niveau de la face de sortie 46 du filtre à air 34.

Selon une première variante de réalisation du dispositif électronique 40, l'organe de mesure 60 est un capteur de pression différentielle, disposé au niveau du filtre à air 34 et apte à mesurer une différence de pression entre la face d'entrée 44 et la face de sortie 46 dudit filtre.

Selon une deuxième variante de réalisation du dispositif électronique 40, représentée à la figure 3, l'organe de mesure 60 comporte un premier 62 et un deuxième 64 capteurs de pression absolue. Le deuxième capteur 64 est disposé dans l'espace intérieur 26, à proximité de la face de sortie 46 du filtre à air 34.

Le premier capteur 62 est disposé dans l'espace extérieur 28, par exemple à proximité de la face d'entrée 44 du filtre à air 34. Alternativement, le premier capteur 62 est disposé à distance du conduit 32 d'entrée d'air.

La description ci-dessus de la voiture 12 du véhicule ferroviaire 10 s'applique à chacune des première 112 et deuxième 212 voitures du véhicule ferroviaire 110, à l'exception des éléments signalés ci-après.

En particulier, chacune des première 112 et deuxième 212 voitures comporte un espace intérieur 126, 226 et un dispositif 130, 230 de ventilation dudit espace intérieur. Chaque dispositif de ventilation 130, 230 comporte un conduit d'entrée d'air, un filtre à air et un ventilateur (non représentés) analogues à ceux du dispositif de ventilation 30 précédemment décrit. Chaque dispositif de ventilation 130, 230 comporte en outre un dispositif électronique 140, 240 de maintenance.

Chacun des dispositifs électroniques 140, 240 comporte un capteur 164, 264 de pression de sortie d'air. Chacun desdits capteurs 164, 264 est situé proche de la face de sortie du filtre à air du dispositif de ventilation 130, 230 correspondant.

Par ailleurs, les dispositifs électroniques 140, 240 incluent un capteur de pression extérieure 362 commun. Ledit capteur de pression extérieure 162 est par exemple logé dans la motrice 116 et au contact de l'air extérieur au véhicule ferroviaire 110.

Par ailleurs, les dispositifs électroniques 140, 240 incluent un boîtier électronique 350 commun, logé dans la motrice 116. Le boîtier électronique 350 est analogue au boîtier 50 précédemment décrit et est électroniquement relié aux capteurs 362, 164, 264, ainsi qu'aux ventilateurs des dispositifs de ventilation 130, 230.

En variante non représentée, chaque dispositif électronique 140, 240 comporte un boîtier distinct, reçu dans la voiture 112, 212 correspondante.

Le dispositif électronique 40, 140, 240 est apte à contrôler le taux d'encrassement du filtre à air 34 du dispositif de ventilation 30, 130, 230.

Plus précisément, la mémoire de programme 54 renferme un programme 66 contrôlant la perte de charge du flux d'air généré par le ventilateur 36 au niveau du filtre à air 34.

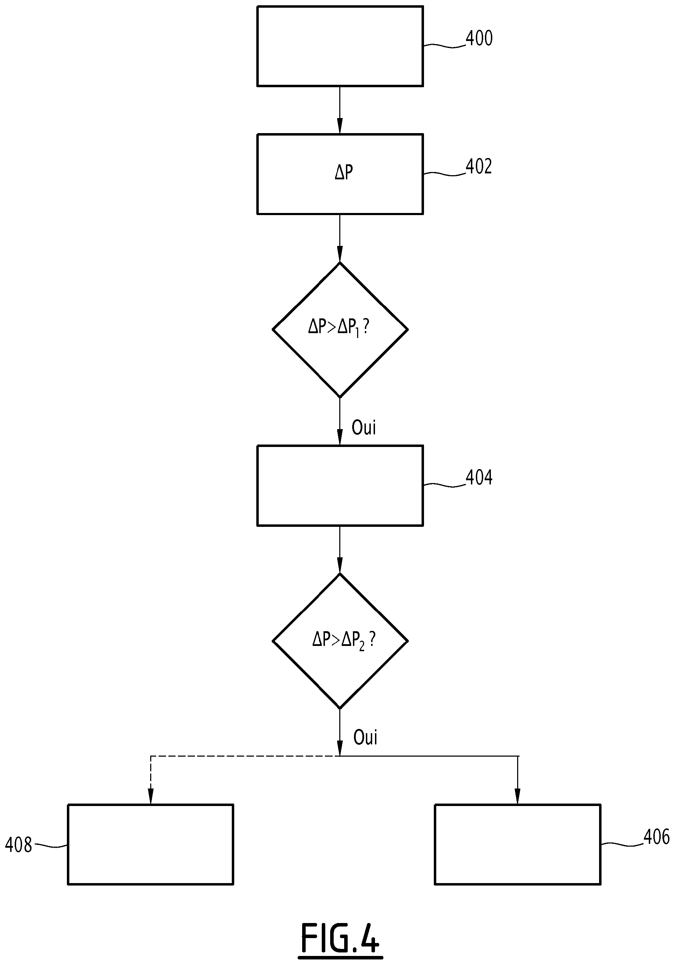

Le programme exécute notamment les étapes suivantes, représentées à la figure 4 par un logigramme :
A intervalles de temps réguliers, alors que le ou les ventilateur(s) 36 est/sont en fonctionnement, l'organe de mesure 60 et/ou les capteurs de pression 62, 64, 362, 164, 264 fournissent (étape 400) des valeurs de pressions au boîtier 50, 350. De préférence, lesdits organe de mesure 60 et/ou capteurs 62, 64, 362, 164, 264 effectuent lesdites mesures lorsque le véhicule ferroviaire 10, 110 est à l'arrêt ou circule à faible vitesse.

Le boîtier 50, 350 détermine ensuite (étape 402) une différence ΔP entre la pression de l'espace extérieur 28 et la pression de l'espace intérieur 26, 126, 226 en sortie du filtre à air 34. Cette différence de pression correspond à une perte de charge liée à un taux d'encrassement du filtre à air 34.

Le programme 66 mémorise une première valeur seuil ΔP₁. Lorsque ΔP dépasse AP₁, le programme 66 émet un signal d'alerte (étape 404), destiné à une équipe de maintenance. Ce message indique par exemple que le filtre 34 a dépassé un seuil critique d'encrassement et est à changer.

De préférence, le signal d'alerte est émis vers un récepteur (non représenté) extérieur au véhicule ferroviaire 10, 110, notamment une base de données centralisant des informations relatives à la maintenance. Une intervention ultérieure peut donc être prévue sur le véhicule ferroviaire 10, 110.

De préférence, le programme 66 mémorise en outre une deuxième valeur seuil ΔP₂, supérieure à ΔP₁. Lorsque ΔP dépasse ΔP₂, le programme 66 émet un signal d'alarme (étape 406), préférentiellement vers un récepteur (non représenté) interne au véhicule ferroviaire 10, 110. Un opérateur se trouvant à bord peut ainsi intervenir en urgence sur le filtre à air 34.

Une telle disposition permet ainsi d'échelonner les degrés d'urgence concernant les interventions sur les filtres à air.

De manière optionnelle, lorsque ΔP dépasse ΔP₂, le programme 66 provoque également (étape 408) une diminution de la vitesse du ventilateur 36, voire un arrêt dudit ventilateur, afin d'éviter toute dégradation du dispositif de ventilation.

Ainsi, la mesure de la pression de part et d'autre du filtre à air 34 permet d'évaluer la perte de charge du flux d'air, donc d'estimer le degré d'encrassement dudit filtre. Les opérations de maintenance sont ainsi déclenchées en fonction de l'état réel de chaque filtre, pour une meilleure efficacité.

## Revendications

1. Procédé de maintenance d'un dispositif de ventilation (30, 130, 230) d'un véhicule ferroviaire (10, 110), ledit véhicule ferroviaire comprenant des parois (20, 22, 24) définissant un espace extérieur (28) et un espace intérieur (26), ledit dispositif de ventilation comportant : un conduit (32) d'entrée d'air traversant l'une desdites parois (22) et débouchant sur l'espace intérieur ; un filtre à air (34) disposé dans ledit conduit ; et un ventilateur (36) apte à insuffler de l'air dans l'espace intérieur à travers ledit conduit, définissant une face d'entrée (44) et une face de sortie (46) du filtre à air ;
le dispositif de ventilation comprenant en outre un organe (60, 62, 64, 164, 264, 362) de mesure de pression, apte à mesurer une différence de pression (ΔP) entre l'air de l'espace extérieur et l'air de l'espace intérieur, ledit espace intérieur étant considéré au niveau de la face de sortie (46) du filtre à air ;
le procédé comprenant les étapes suivantes :
- mesure (400, 402) de la différence de pression (ΔP), et
- si ladite différence de pression est supérieure à un premier seuil (AP₁), émission (404) d'un premier signal d'alerte vers un récepteur extérieur au véhicule ferroviaire ; et
- si la différence de pression est supérieure à un deuxième seuil (ΔP₂), ledit deuxième seuil étant supérieur au premier seuil, émission (406) d'un deuxième signal d'alerte vers un récepteur interne au véhicule ferroviaire.

2. Procédé de maintenance selon la revendication 1, dans lequel l'émission du deuxième signal d'alerte est simultanée à une diminution (408) d'une vitesse de rotation du ventilateur (36).

3. Véhicule ferroviaire (10, 110) comprenant: des parois (20, 22, 24) définissant un espace extérieur (28) et un espace intérieur (26) ; et un premier dispositif (30, 130) de ventilation, ledit premier dispositif de ventilation comportant: un premier conduit (32) d'entrée d'air traversant l'une (22) des parois et débouchant sur l'espace intérieur ; un premier filtre à air (34) disposé dans ledit premier conduit ; et un premier ventilateur (36) apte à insuffler de l'air dans l'espace intérieur à travers ledit premier conduit, définissant une face d'entrée (44) et une face de sortie (46) du premier filtre à air ;
le premier dispositif de ventilation comprenant en outre un premier organe (60, 62, 64, 164, 362) de mesure de pression, apte à mesurer une différence de pression (ΔP) entre l'air de l'espace extérieur et l'air de l'espace intérieur, ledit espace intérieur étant considéré au niveau de la face de sortie (46) du premier filtre à air;
le premier dispositif de ventilation étant muni d'un dispositif électronique (40, 140) de mise en œuvre d'un procédé selon l'une des revendications 1 ou 2.

4. Véhicule ferroviaire selon la revendication 3, dans lequel le premier organe de mesure de pression (60) est un capteur de pression différentielle, disposé au niveau du premier filtre à air.

5. Véhicule ferroviaire selon la revendication 3, dans lequel le premier organe de mesure de pression comporte un premier (62, 362) et un deuxième (64, 164) capteurs de pression absolue, le premier capteur étant disposé dans l'espace extérieur (28), le deuxième capteur étant disposé dans l'espace intérieur, au niveau de la face de sortie (46) du premier filtre à air.

6. Véhicule ferroviaire selon la revendication 5, dans lequel le premier capteur est disposé au niveau de la face d'entrée (44) du premier filtre à air.

7. Véhicule ferroviaire selon la revendication 5, dans lequel le premier capteur (62, 362) est disposé à distance du premier conduit (32) d'entrée d'air.

8. Véhicule ferroviaire (110) selon la revendication 7, comprenant en outre un deuxième dispositif de ventilation (230), ledit deuxième dispositif de ventilation comportant : un deuxième conduit d'entrée d'air traversant une paroi du véhicule et débouchant sur l'espace intérieur ; un deuxième filtre à air disposé dans ledit deuxième conduit ; et un deuxième ventilateur apte à insuffler de l'air dans l'espace intérieur à travers ledit deuxième conduit, définissant une face d'entrée et une face de sortie du deuxième filtre à air ;
le deuxième dispositif de ventilation comprenant en outre un deuxième organe de mesure de pression, apte à mesurer une différence de pression entre l'air de l'espace extérieur et l'air de l'espace intérieur ; ledit deuxième organe (362, 264) de mesure de pression comprenant : le premier capteur (362) de pression absolue ; et un troisième capteur (264) de pression absolue, disposé dans l'espace intérieur, au niveau de la face de sortie du deuxième filtre à air ;
le deuxième dispositif de ventilation étant muni d'un dispositif électronique (240) de mise en œuvre d'un procédé selon l'une des revendications 1 à 2.

9. Véhicule ferroviaire selon l'une des revendications 3 à 8, dans lequel le premier dispositif de ventilation comporte en outre un échangeur de chaleur (48) disposé dans le premier conduit (32), ledit échangeur étant apte à effectuer un échange thermique avec l'air traversant ledit conduit.

## Patentansprüche

1. Verfahren zur Wartung einer Belüftungsvorrichtung (30, 130, 230) eines Schienenfahrzeugs (10, 110), wobei das Schienenfahrzeug Wände (20, 22, 24) aufweist, die einen Außenraum (28) und einen Innenraum (26) definieren, wobei die Belüftungsvorrichtung aufweist: einen Lufteinlasskanal (32), der durch eine der Wände (22) hindurchgeht und in den Innenraum mündet; einen Luftfilter (34), der in dem Kanal angeordnet ist; und ein Gebläse (36), das geeignet ist, Luft durch den Kanal in den Innenraum zu blasen, und eine Einlassfläche (44) und eine Auslassfläche (46) des Luftfilters definiert;
wobei die Belüftungsvorrichtung ferner ein Druckmesselement (60, 62, 64, 164, 264, 362) umfasst, das in der Lage ist, eine Druckdifferenz (ΔP) zwischen der Luft im Außenraum und der Luft im Innenraum zu messen, wobei der Innenraum an der Auslassfläche (46) des Luftfilters betrachtet wird;
wobei das Verfahren die folgenden Schritte umfasst:
- Messen (400, 402) der Druckdifferenz (ΔP), und
- wenn die Druckdifferenz größer als ein erster Schwellenwert (ΔP₁) ist, Senden (404) eines ersten Alarmsignals an einen Empfänger außerhalb des Schienenfahrzeugs; und
- wenn die Druckdifferenz größer als ein zweiter Schwellenwert (ΔP₂) ist, wobei der zweite Schwellenwert größer als der erste Schwellenwert ist, Senden (406) eines zweiten Alarmsignals an einen Empfänger innerhalb des Schienenfahrzeugs.

2. Wartungsverfahren nach Anspruch 1, wobei das Senden des zweiten Warnsignals gleichzeitig mit einer Abnahme (408) einer Drehzahl des Gebläses (36) erfolgt.

3. Schienenfahrzeug (10, 110), umfassend: Wände (20, 22, 24), die einen Außenraum (28) und einen Innenraum (26) definieren; und eine erste Belüftungsvorrichtung (30, 130), wobei die erste Belüftungsvorrichtung umfasst: einen ersten Lufteinlasskanal (32), der durch eine (22) der Wände hindurchgeht und in den Innenraum mündet; einen ersten Luftfilter (34), der in dem ersten Kanal angeordnet ist; und ein erstes Gebläse (36), das geeignet ist, Luft durch den ersten Kanal in den Innenraum zu blasen, und eine Einlassfläche (44) und eine Auslassfläche (46) des ersten Luftfilters definiert;
wobei die Belüftungsvorrichtung ferner ein Druckmesselement (60, 62, 64, 164, 362) umfasst, das in der Lage ist, eine Druckdifferenz (ΔP) zwischen der Luft im Außenraum und der Luft im Innenraum zu messen, wobei der Innenraum an der Auslassfläche (46) des Luftfilters betrachtet wird;
wobei die erste Belüftungsvorrichtung mit einer elektronischen Vorrichtung (40, 140) zur Durchführung eines Verfahrens nach einem der Ansprüche 1 oder 2 versehen ist.

4. Schienenfahrzeug nach Anspruch 3, wobei das erste Druckmesselement (60) ein am ersten Luftfilter angeordneter Differenzdrucksensor ist.

5. Schienenfahrzeug nach Anspruch 3, wobei das erste Druckmesselement einen ersten (62, 362) und einen zweiten (64, 164) Absolutdrucksensor umfasst, wobei der erste Sensor im Außenraum (28) angeordnet ist und der zweite Sensor im Innenraum an der Auslassfläche (46) des ersten Luftfilters angeordnet ist.

6. Schienenfahrzeug nach Anspruch 5, wobei der erste Sensor an der Einlassfläche (44) des ersten Luftfilters angeordnet ist.

7. Schienenfahrzeug nach Anspruch 5, wobei der erste Sensor (62, 362) in einem Abstand zum ersten Lufteinlasskanal (32) angeordnet ist.

8. Schienenfahrzeug (110) nach Anspruch 7, ferner umfassend eine zweite Belüftungsvorrichtung (230), wobei die zweite Belüftungsvorrichtung umfasst: einen zweiten Lufteinlasskanal, der durch eine Wand des Fahrzeugs hindurchgeht und in den Innenraum mündet; einen zweiten Luftfilter, der in dem zweiten Kanal angeordnet ist; und ein zweites Gebläse, das in der Lage ist, Luft durch den zweiten Kanal in den Innenraum zu blasen, und eine Einlassfläche und eine Auslassfläche des zweiten Luftfilters definiert;
wobei die zweite Belüftungsvorrichtung ferner ein zweites Druckmesselement umfasst, das in der Lage ist, eine Druckdifferenz zwischen der Luft im Außenraum und der Luft im Innenraum zu messen; wobei das zweite Druckmesselement (362, 264) umfasst: den ersten Absolutdrucksensor (362); und einen dritten Absolutdrucksensor (264), der im Innenraum an der Auslassfläche des zweiten Luftfilters angeordnet ist;
wobei die zweite Belüftungsvorrichtung mit einer elektronischen Vorrichtung (240) zur Durchführung eines Verfahrens nach einem der Ansprüche 1 bis 2 versehen ist.

9. Schienenfahrzeug nach einem der Ansprüche 3 bis 8, wobei die erste Belüftungsvorrichtung ferner einen im ersten Kanal (32) angeordneten Wärmetauscher (48) aufweist, wobei der Wärmetauscher in der Lage ist, einen Wärmeaustausch mit der durch den Kanal strömenden Luft zu bewirken.

## Claims

1. Method for maintaining a ventilation device (30, 130, 230) of a railway vehicle (10, 110), said railway vehicle comprising walls (20, 22, 24) defining an outside space (28) and an inside space (26), said ventilation device comprising: an air inlet duct (32) which passes through one of said walls (22) and opens into the inside space; an air filter (34) arranged in said duct; and a fan (36) capable of blowing air into the inside space through said duct, defining an inlet face (44) and an outlet face (46) of the air filter;
the ventilation device further comprising a pressure measuring member (60, 62, 64, 164, 264, 362) capable of measuring a pressure difference (ΔP) between the air of the outside space and the air of the inside space, said inside space being considered in the region of the outlet face (46) of the air filter;
the method comprising the following steps:
- measuring (400, 402) the pressure difference (ΔP), and
- if said pressure difference is greater than a first threshold (ΔP₁), transmitting (404) a first warning signal to a receiver outside the railway vehicle; and
- if the pressure difference is greater than a second threshold (ΔP₂), said second threshold being greater than the first threshold, transmitting (406) a second warning signal to a receiver inside the railway vehicle.

2. Maintenance method according to claim 1, wherein the transmission of the second warning signal is simultaneous with a reduction (408) of a speed of rotation of the fan (36).

3. Railway vehicle (10, 110) comprising: walls (20, 22, 24) defining an outside space (28) and an inside space (26); and a first ventilation device (30, 130), said first ventilation device comprising: a first air inlet duct (32) which passes through one (22) of the walls and opens into the inside space; a first air filter (34) arranged in said first duct; and a first fan (36) capable of blowing air into the inside space through said first duct, defining an inlet face (44) and an outlet face (46) of the first air filter;
the first ventilation device further comprising a first pressure measuring member (60, 62, 64, 164, 362) capable of measuring a pressure difference (ΔP) between the air of the outside space and the air of the inside space, said inside space being considered in the region of the outlet face (46) of the first air filter;
the first ventilation device being equipped with an electronic device (40, 140) for carrying out a method according to either claim 1 or claim 2.

4. Railway vehicle according to claim 3, wherein the first pressure measuring member (60) is a differential pressure sensor arranged in the region of the first air filter.

5. Railway vehicle according to claim 3, wherein the first pressure measuring member comprises a first (62, 362) and a second (64, 164) absolute pressure sensor, the first sensor being arranged in the outside space (28), the second sensor being arranged in the inside space, in the region of the outlet face (46) of the first air filter.

6. Railway vehicle according to claim 5, wherein the first sensor is arranged in the region of the inlet face (44) of the first air filter.

7. Railway vehicle according to claim 5, wherein the first sensor (62, 362) is arranged at a distance from the first air inlet duct (32).

8. Railway vehicle (110) according to claim 7, further comprising a second ventilation device (230), said second ventilation device comprising: a second air inlet duct which passes through a wall of the vehicle and opens into the inside space; a second air filter arranged in said second duct; and a second fan capable of blowing air into the inside space through said second duct, defining an inlet face and an outlet face of the second air filter;
the second ventilation device further comprising a second pressure measuring member capable of measuring a pressure difference between the air of the outside space and the air of the inside space; said second pressure measuring member (362, 264) comprising: the first absolute pressure sensor (362); and a third absolute pressure sensor (264) arranged in the inside space, in the region of the outlet face of the second air filter;
the second ventilation device being equipped with an electronic device (240) for carrying out a method according to either claim 1 or claim 2.

9. Railway vehicle according to any one of claims 3 to 8, wherein the first ventilation device further comprises a heat exchanger (48) arranged in the first duct (32), said exchanger being capable of carrying out a heat exchange with the air passing through said duct.
